# EUROPEAN PATENT SPECIFICATION

(11) **EP 4 339 687 B1**
(45) Date of publication and mention of the grant of the patent: **16.07.2025**
(21) Application number: 23196283.8
(22) Date of filing: 08.09.2023
(51) Int. Cl.: G02B 27/01

(54) **ELECTRONIC DEVICES WITH MOVABLE OPTICAL ASSEMBLIES**
ELEKTRONISCHE VORRICHTUNGEN MIT BEWEGLICHEN OPTISCHEN ANORDNUNGEN
DISPOSITIFS ÉLECTRONIQUES AVEC ENSEMBLES OPTIQUES MOBILES

(30) Priority: 15.09.2022 US 202263406902 P; 12.07.2023 US 202318351296
(43) Date of publication of application: 20.03.2024
(73) Proprietor: Apple Inc., Cupertino CA 95014 (US)
(72) Inventor: POMEROY, Shannon, San Francisco (US); BABIARZ, Kristina A., San Jose (US); TAO, Jia, San Jose (US); ZIMMERMAN, Aidan N., Poway (US); SEADAT BEHESHTI, Matin, Sunnyvale (US); TREKELL, Blake N., San Francisco (US); SPRAGUE, William W., San Francisco (US); MIRABELLA, Anna V., San Francisco (US)
(74) Representative: Froud, Christopher Andrew

(56) References cited:
- CN-U- 209 690 628
- US-A1- 2020 211 512
- US-A1- 2021 037 232

## Description

This application claims priority to U.S. patent application No. 18/351,296, filed July 12, 2023, and U.S. provisional patent application No. 63/406,902, filed September 15, 2022.

### Field

This relates generally to head-mounted devices.

### Background

Electronic devices have components such as displays. The positions of these components may sometimes be adjusted.

CN 209 690 628 U discloses a head mounted display having a support structure, a display module displaying an image, a gaze tracker, a positioner adjusts the interpupillary distance measured by the gaze tracker.

US 2020/211512 A1 and US 2021/037232 A1 disclose head mounted displays.

### Summary

The invention is defined in the appended claims.

### Brief Description of the Drawings

FIG. 1 is a diagram of an illustrative head-mounted device in accordance with an embodiment.
FIGS. 2 and 3 are rear views of portions of illustrative head-mounted devices in accordance with embodiments.
FIG. 4 is a graph in which illustrative optical assembly adjustment values are plotted as a function of measured eye relief for multiple different illustrative measured interpupillary distances in accordance with an embodiment.
FIG. 5 is a flow chart of illustrative operations involved in using a head-mounted device in accordance with an embodiment.

### Detailed Description

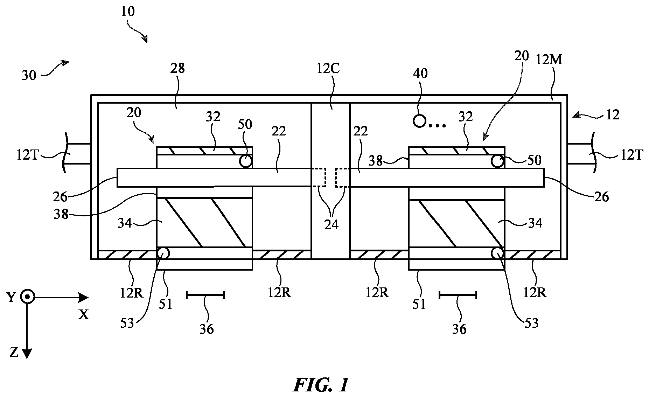

FIG. 1 is a schematic diagram of an illustrative electronic device of the type that may include movable components. Device 10 of FIG. 1 is a head-mounted device (e.g., goggles, glasses, a helmet, and/or other head-mounted device), a cellular telephone, a tablet computer, a laptop computer, a wristwatch, a peripheral device (sometimes referred to as a peripheral) such as a pair of headphones, or other electronic equipment, where examples that are not head-mounted are not according to the claimed invention. According to the claimed invention, device 10 is a head-mounted device such as a pair of goggles (sometimes referred to as virtual reality goggles, mixed reality goggles, augmented reality glasses, etc.).

As shown in the illustrative top view of device 10 of FIG. 1, device 10 has a housing such as housing 12 (sometimes referred to as a head-mounted support structure or head-mounted support). Housing 12 may include a main portion such as portion 12M (sometimes referred to as a main unit or head-mounted unit) and other head-mounted support structures such as head strap 12T. When housing 12 is being worn on the head of a user, the front of housing 12 may face outwardly away from the user, the rear of housing 12 may face towards the user, and the user's eyes may be located in eye boxes 36.

Device 10 may have electrical and optical components that are used in displaying images to eye boxes 36 when device 10 is being worn. These components may include left and right optical assemblies 20 (sometimes referred to as optical modules). Each optical assembly 20 may have an optical assembly support 38 (sometimes referred to as a lens barrel or optical module support) and guide rails 22 along which optical assemblies 20 may slide to adjust optical-assembly-to-optical-assembly separation to accommodate different user interpupillary distances.

Each assembly 20 may have a display 32 that has an array of pixels for displaying images and a lens 34. Display 32 and lens 34 of each assembly 20 may be coupled to and supported by support 38. During operation, images displayed by displays 32 may be presented to eye boxes 36 through lenses 34 for viewing by a user. Each optical assembly 20 may also have a gaze tracker 50. Gaze trackers 50 may each include one or more light sources (e.g., infrared light-emitting diodes that provide flood illumination and glints for eye tracking) and an associated camera (e.g., an infrared camera). Using gaze trackers 50, which may sometimes be referred to as gaze tracking systems or gaze tracking sensors, device 10 can gather data on a user's eyes located in eye boxes 36. As an example, the direction in which a user's eyes are pointing (sometimes referred to as a user's point of gaze or direction of view) may be measured. Biometric information such as iris scan information may also be gathered. In addition, gaze trackers 50, may be used to measure the location of a user's eyes relative to device 10 and thereby measure the eye relief of the user's eyes (e.g., the distance between the lenses of device 10 and the eyes) and the separation between the user's left and right eyes (sometimes referred to as the user's interpupillary distance). If desired, gaze trackers 50 (e.g., the cameras of trackers 50) may capture images of the skin of the user's face surrounding the user's eyes (e.g., to measure whether this skin is loose or taut).

Each optical assembly may have magnets, clips, and/or other engagement features to allow removable vision correction lenses (sometimes referred to as prescription lenses) to be removably attached to assemblies 20 in alignment with lenses 34 (see, e.g., illustrative optional vision correction lenses 51). Lenses 51 may have magnets that are sensed by sensors 53 (e.g., magnetic sensors in assemblies 20) or sensors 53 may be optical sensors, switches, or other sensors configured to gather other information indicating when lenses 51 are present.

Housing 12 may have a flexible curtain (sometimes referred to as a flexible rear housing wall or fabric housing wall) such as curtain 12R on the rear of device 10 facing eye boxes 36. Curtain 12R has openings that receive assemblies 20. The edges of curtain 12R that surround each support 38 may be coupled to that support 38. The outer peripheral edge of curtain 12R may be attached to rigid housing walls forming an outer shell portion of main housing 12M.

The walls of housing 12 may separate interior region 28 within device 10 from exterior region 30 surrounding device 10.

Inner ends 24 of guide rails 22 may be attached to central housing portion 12C. Opposing outer ends 26 may, in an illustrative configuration, be unsupported (e.g., the outer end portions of rails 22 may not directly contact housing 12, so that these ends float in interior region 28 with respect to housing 12).

Device 10 may include control circuitry and other components such as component 40. The control circuitry may include storage, processing circuitry formed from one or more microprocessors and/or other circuits. To support communications between device 10 and external equipment, the control circuitry may include wireless communications circuitry. Components 40 may include sensors such as such as force sensors (e.g., strain gauges, capacitive force sensors, resistive force sensors, etc.), audio sensors such as microphones, touch and/or proximity sensors such as capacitive sensors, optical sensors such as optical sensors that emit and detect light, ultrasonic sensors, and/or other touch sensors and/or proximity sensors, monochromatic and color ambient light sensors, image sensors, sensors for detecting position, orientation, and/or motion (e.g., accelerometers, magnetic sensors such as compass sensors, gyroscopes, and/or sensors such as inertial measurement units that contain some or all of these sensors), radio-frequency sensors, depth sensors (e.g., structured light sensors and/or depth sensors based on stereo imaging devices), optical sensors such as self-mixing sensors and light detection and ranging (lidar) sensors that gather time-of-flight measurements, humidity sensors, moisture sensors, visual inertial odometry sensors, gaze tracking sensors, and/or other sensors. In some arrangements, devices 10 may use sensors to gather user input (e.g., button press input, touch input, etc.). Sensors may also be used in gathering environmental motion (e.g., device motion measurements, temperature measurements, ambient light readings, etc.) and/or may be used in measuring user activities and/or attributes (e.g., point-of-gaze, eye relief, interpupillary distance, etc.). If desired, position sensors such as encoders (e.g., optical encoders, magnetic encoders, etc.) may measure the position and therefore the movement (e.g., the velocity, acceleration, etc.) of optical assemblies 20 along rails 22.

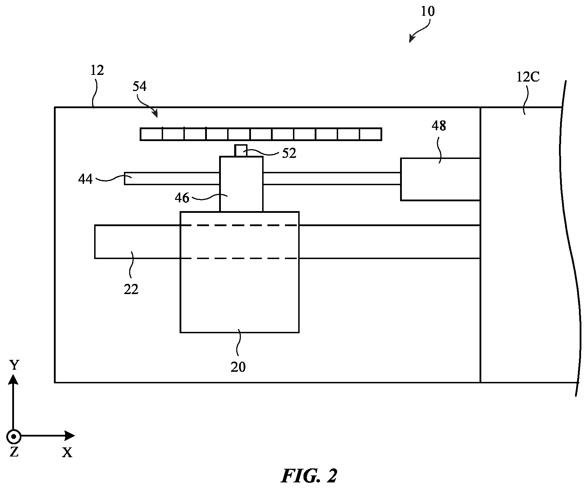

FIG. 2 is a rear view of an illustrative portion of device 10 (e.g., an inside left portion). Device 10 may have left and right actuators (e.g., motors) such as motor 48 that are used to rotate an elongated threaded shaft such as screw 44. Nut 46 has threads that engage the threads on screw 44. As the motor 48 on each side of device 10 is turned, a corresponding nut 46 is driven in the +X or -X direction (in accordance with whether screw 44 is being rotated clockwise or counterclockwise). In turn, this moves the optical assembly 20 on that side of device 10 in the +X or -X direction along its optical assembly guide rail 22. If desired, the left and right motors 48 may be adjusted independently, so that optical assemblies 20 on the left and right of device 10 may be moved independently.

Each assembly 20 (e.g., each support 38 of FIG. 1) may have portions that receive a corresponding rail 22 and that guide that assembly 20 along that rail 22. By controlling the activity of motors 48 in tandem or individually, the spacing between the left and right optical assemblies of device 10 can be adjusted to accommodate the interpupillary distance of different users. For example, if gaze trackers 50 determine that a user has closely spaced eyes, assemblies 20 may be moved inwardly (towards each other) and if a user has widely spaced eyes, assemblies 20 may be moved outwardly (away from each other). By matching the spacing between optical assemblies 20 to the measured interpupillary distance of a user, the user may satisfactorily view visual content being presented by the displays of the optical assemblies.

The position and therefore the movement of each optical assembly may be monitored using one or more sensors. In the illustrative configuration of FIG. 2, motor 48 (e.g., the motor on the left side of device 10) and optical module 20 have been provided with an optical assembly position sensor based on a magnetic encoder. The encoder includes magnetic strip 54 and magnetic sensor 52. Magnetic sensor 52 may be a Hall Effect sensor or other suitable magnetic sensor that is configured to move with optical assembly 20. Magnetic strip 54, which may be affixed to housing 12, has a series of magnet poles (e.g., north and south poles) that extend along the X dimension parallel to guide rail 22 and parallel to the X-axis position adjustment direction associated with optical assembly 20. As optical assembly 20 is moved along guide rail 22, the magnetic encoder (e.g., sensor 52) measures the change in magnetic field resulting as magnetic sensor 52 passes by different magnets in strip 54. In this way, optical assembly 20 is provided with a position reference (e.g., by counting north and south magnetic poles in strip 54). The position measurements made with the position sensor may reveal attributes of the motion of optical assembly 20 such as the velocity of optical assembly 20 and, if desired, the acceleration and deceleration of assembly 20. Accordingly, the magnetic encoder (or other position sensor) associated with each optical assembly 30 may be used by device 10 to measure the location of that optical assembly so that the spacing between optical assemblies 20 can be satisfactorily adjusted (e.g., to help ensure that the spacing between optical assemblies 20 has been adjusted to match or nearly match the user's interpupillary distance). The position readings from the optical assembly position sensors (e.g., the magnetic encoders) may also be used to determine the velocities of the optical assemblies as they are moved.

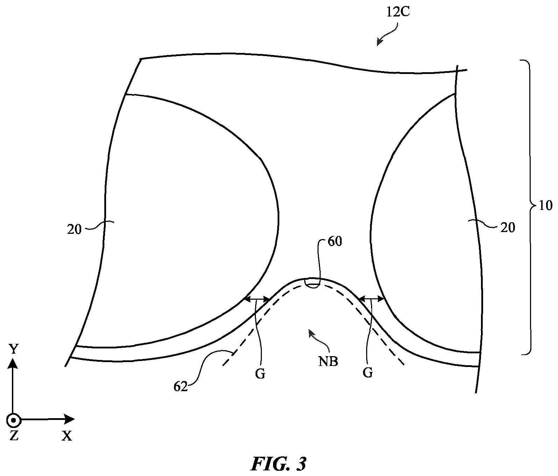

Optical assembly velocity information and/or other information from the optical assembly position sensors (e.g., linear position sensors formed from the magnetic encoders) may be used in monitoring whether the optical assemblies have slowed down their movement due to contact between the optical assemblies and the nose of a user. Consider, as an example, the arrangement of FIG. 3. FIG. 3 is a rear view of a central nose-bridge portion NB of device 10. As shown in FIG. 3, nose bridge portion NB of housing portion 12C has a nose-shaped recess 60, which is configured to receive the user's nose (see, e.g., illustrative nose surface 62). In some situations (e.g., when a user has a wide interpupillary distance), optical assemblies 20 reside at a non-zero distance G from surface 62 (sometimes referred to as gap G) after motors 48 adjusted the positions of assemblies 20 to match the user's interpupillary distance. In other situations, such as when a user has a large eye relief and small interpupillary distance, motors 48 may move optical assemblies inward until curtain 12R (FIG. 1) and optical assemblies 20 contact the left and right sides of nose surface 62.

When optical assemblies 20 contact the left and right sides of nose surface of 62, motors 48 will encounter resistance to further lateral movement of the optical assemblies along the X axis. This will cause optical assemblies 20 to move more slowly. The optical assembly position sensors will sense the reduction in the velocity of the optical assemblies. In this way, device 10 is informed that optical assemblies 20 are contacting and pressing against nose surface 62. To ensure that device 10 is comfortable as device 10 is being worn on the head of the user, the position of the optical assemblies may, in response to this detected nose contact, be adjusted outward, away from nose surface 62 (e.g., by 1-3 mm or other suitable amount). This outward nudge in the positions of the optical assemblies may be made even if the final separation between the optical assemblies is slightly larger than the user's measured interpupillary distance.

Following outward adjustment of optical assemblies 20, a non-zero gap G may be created between optical assemblies 20 and corresponding side portions of the user's nose (e.g., adjacent portions of nose surface 62) and/or inward pressure imposed on the sides of the user's nose by optical assemblies 20 can be reduced to enhance comfort. By monitoring the optical assembly position sensors during optical assembly position adjustment with motors 48, device 10 can identify a location for assemblies 20 in which the left and right assemblies 20 are separated by distance that is matched as closely as possible to the user's measured interpupillary distance while ensuring satisfactory comfort for the user.

According to the invention, the position of optical assemblies 20 can be adjusted satisfactorily involves the use of eye relief measurements from gaze trackers 50. When device 10 is placed onto the head of the user, gaze trackers 50 may measure the user's interpupillary distance and may measure the user's eye relief. Motors 48 may then adjust the positions of optical assemblies 20 based on the measured eye relief and measured interpupillary distance of the user. In an illustrative configuration, the positions of optical assemblies 20 maybe offset (e.g., nudged outwards from the location where the spacing between assemblies 20 matches the measured interpupillary distance of the user) by an amount that varies depending on both measured interpupillary distance and measured eye relief.

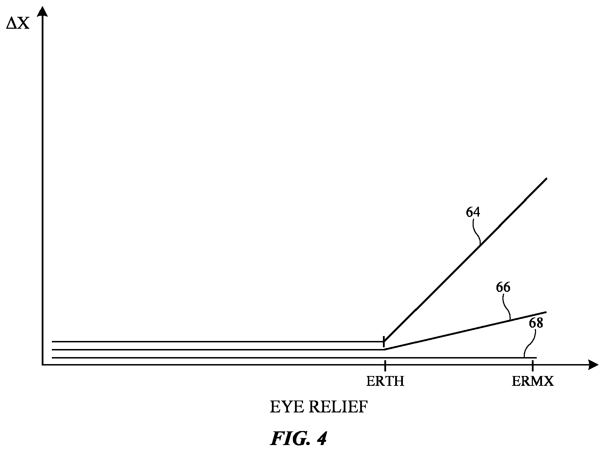

This type of approach is illustrated in the graph of FIG. 4. In the graph of FIG. 4, lateral offset ΔX represents the distance by which an optical assembly is adjusted outwardly (beyond the nominal position in which optical assembly separation matches measured interpupillary distance) to enhance fit. There are three illustrative curves in the graph of FIG. 4. Curve 64 corresponds to a measured interpupillary distance IPDA, curve 66 corresponds to a measured interpupillary distance IPDB, which is larger than interpupillary distance IPDA, and curve 68 corresponds to a measured interpupillary distance IPDC, which is larger than interpupillary distance IPDA and larger than interpupillary distance IPDB. The values of IPDA, IPDB, and IPDC may be in the range of 52 to 74 mm or any other suitable range. In practice, device 10 may store a family of curves (e.g., empirically determined curves) for any suitable number of measured interpupillary distances and/or may represent the relationships embodied in curves such as curves 64, 66, and 68 using tables, functions, and/or other data structures.

As the graph of a FIG. 4 illustrates, if the measured eye relief of a user falls below a predetermined threshold (e.g., ERTH in the example of FIG. 4), the user is unlikely to experience pressure from optical assemblies 20 on the sides of the user's nose. Accordingly, for measured user eye relief values below eye relief threshold ERTH, optical assemblies 20 may be separated along the X axis by a distance that matches the measured interpupillary distance of the user (e.g., there is no need to use a non-zero value of ΔX to adjust the position of optical assemblies 20 outwardly after they have reached the appropriate spacing to match the user's interpupillary distance). The value of ΔX is therefore zero for users with measured eye relief values of less than ERTH (which may be, for example, a value between 18 mm and 22 mm or other suitable eye relief threshold value).

If, however, the measured eye relief of a user exceeds eye relief threshold ERTH, it may be beneficial for certain users to increase the spacing between optical assemblies 20 by nudging each optical assembly outwardly by an amount ΔX. As an example, consider users with measured interpupillary distances of IPDA. For this class of user, it may be beneficial to adjust the spacing of optical assemblies 20 outwardly by ΔX values that follow curve 64. As shown by curve 64, ΔX may be zero for measured eye relief values of less than ERTH, whereas for measured eye relief values exceeding ERTH, ΔX may rise progressively as a function of measured eye relief (e.g., up to a maximum ΔX value at a maximum measured eye relief value of ERMX, which may be, for example, 25 mm or other suitable value). Users with larger interpupillary distances, such as a measured interpupillary distance of IPDB, may benefit from a less aggressive outward increase in optical assembly spacing, as shown by curve 66 in which the value of ΔX rises more slowly as a function of increasing measured eye relief over ERTH than curve 64.

An interpupillary distance threshold may be present above which it may not be desirable to make any ΔX adjustments for a user, regardless of their measured eye relief. When, for example, a user has a large measured interpupillary distance (e.g., a measured interpupillary distance of IPDC, which exceeds the interpupillary distance threshold), there will generally not be a comfort benefit in increasing optical assembly spacing. As a result, the recommended outward adjustment in optical assembly position ΔX as a function of measured eye relief for users with these larger measured interpupillary distances follows curve 68 (e.g., ΔX remains at zero, even for a measured eye relief of ERMX). With this approach, only at measured interpupillary distances below the interpupillary distance threshold will outward adjustments in optical assembly position be used.

The graph of FIG. 4 illustrates how motors 48 may place optical assemblies 20 at positions that vary from the measured positions of the user's eyes. In the example of FIG. 4, measured eye relief and interpupillary distance values were used in determining satisfactory positions for assemblies 20. In particular, outward adjustments ΔX in the positions of optical assemblies 20 were recommended as a function of the interpupillary distance and eye relief values measured for a user with gaze trackers 50. If desired, additional factors may be taken into consideration in making optical assembly adjustments such as these (e.g., additional factors that may be used in combination with or as an alternative to using interpupillary distance measurements and eye relief measurements) and/or other suitable action may be taken based on data gathered with gaze trackers 50 and/or other sensors in device 10.

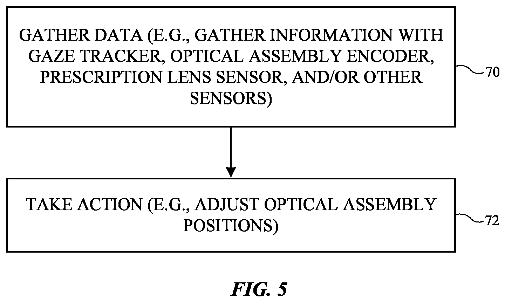

FIG. 5 is a flow chart illustrating operations involved in using motors 48 and other components in device 10 to make adjustments to device 10 as a function of data gathered with gaze trackers 50 and/or other sensors.

During the operations of block 70, device 10 may gather data. The gathered data may include, for example, measurements obtained by gaze trackers 50. These measurements include the measured interpupillary distance of a user wearing device 10, the measured eye relief of a user wearing device 10, and may include, for example, the measured skin tautness around the eyes of a user wearing device 10, and/or other gaze tracker measurements. The measurements of block 70 may also include measurements with the position sensors (e.g., the magnetic encoders) of optical assemblies 20. For example, when a user dons device 10, motors 48 may automatically start to move optical assemblies 20 to positions associated with the user's measured interpupillary distance from gaze trackers 50. During this initial movement or during movement in response to a user input command or other movement, the position sensors may be used to monitor the velocities of assemblies 20. In response to detected slowing of the speed of inward movement of assemblies 20, device 10 can conclude that assemblies 20 are beginning to exert pressure on the sides of the user's nose (e.g., nose surface 62). The locations associated with the measured reduction in optical assembly velocity are another form of measurement data that may be gathered during block 70.

Further information that can be gathered during the operations of block 70 relates to the status of vision correction lenses 51 on device 10. Vision correction lenses 51 may contain magnets that produce a magnetic field. Device 10 (e.g., assemblies 20) may have vision correction lens sensors such as magnetic sensors 53 that determine whether or not lenses 51 are present by monitoring for the presence of the magnetic fields produced by lenses 51. In response to detection of the magnetic fields from lenses 51 with sensors 53, it can be concluded that lenses 51 are present.

During the operations of block 72, device 10 can take action based on the data gathered at block 70. As an example, the positions of optical assemblies 20 may be adjusted using motors 48. In some configurations, the positions of optical assemblies 20 may be nudged outwards by an amount ΔX determined from measured interpupillary distance and eye relief values, as described in connection with FIG. 4. If desired, optical assemblies 20 may, in some scenarios, be moved inward slightly (e.g., assemblies 20 may be moved towards each other such that assemblies 20 are closer than dictated by the measured value of a user's interpupillary distance to increase nasal field-of-view overlap when doing so presents a low risk of optical assembly nose surface contact or when any potential nose contact can be detected with an optical module position sensor or other sensor). To reduce wrinkles in rear curtain 12R, optical assemblies 20 may be moved inwards or outwards slightly to tighten curtain 12R. Optical assembly movement with motors 48 may also be used to provide a user with an alert (e.g., a haptic alert indicating that an incoming message has been received and/or another condition has been determined to be present). In some arrangements, gaze sensor measurements from trackers 50 during block 70 can be used to determine whether the user's skin surrounding the user's eyes is taut. In response to detecting an increase in skin tautness as assemblies 20 are moved (e.g., as assemblies 20 are being moved towards each other), it can be concluded that assemblies 20 are pressing or are about to press on nose surface 62, so further movement inward of assemblies 20 can be halted and/or assemblies 20 may be nudged outwardly to compensate. The positions of optical assemblies 20 may also be adjusted in response to detection that vision correction lenses 51 are present or are not present. The presence of lenses 51 may, as an example, increase or decrease the risk of nose contact by assemblies 20, so information on the presence of lenses 51 (and, if desired, the prescription associated with lenses 51) may be taken into account when using motors 48 to adjust the position of assemblies 20. In general, these types of adjustments and/or other suitable actions may be taken during the operations of block 72 in response to gaze tracker measurement data and/or other data measured during the operations of block 70.

To help protect the privacy of users, any personal user information that is gathered by sensors may be handled using best practices. These best practices including meeting or exceeding any privacy regulations that are applicable. Opt-in and opt-out options and/or other options may be provided that allow users to control usage of their personal data.

In accordance with the invention, a head-mounted device is provided that includes a head-mounted housing, an optical assembly in the head-mounted housing that is configured to provide an image to an eye box, a gaze tracker and a motor configured to position the optical assembly based on a measured eye relief from the gaze tracker and a measured interpupillary distance from the gaze tracker.

Preferably, the motor is configured to move the optical assembly outward from a central portion of the head-mounted housing in response to determining that the measured eye relief is more than a predetermined threshold amount.

Preferably, the motor is configured to adjust the position of the optical assembly outwards by a first amount in response to determining that the measured eye relief has an eye relief value that is more than a predetermined threshold amount and that the measured interpupillary distance has a first value and is configured to move the optical assembly outwards by a second amount that is more than the first amount in response to determining that the measured eye relief has the eye relief value and that the measured interpupillary distance has a second value that is less than the first value.

Preferably, the head-mounted device includes a vision correction lens sensor, the motor is further configured to position the optical assembly based on information from the vision correction lens sensor.

Preferably, the optical assembly is configured to receive a removable vision correction lens with a magnet that produces a magnetic field and the motor is further configured to position the optical assembly based on information from the magnetic sensor.

Preferably, the motor is configured to provide a haptic alert by moving the optical assembly.

Preferably, the gaze tracker is configured to measure skin tautness.

Preferably, the motor is further configured to adjust the position of the optical assembly based on the measured skin tautness.

The foregoing is merely illustrative and various modifications can be made to the described embodiments. The foregoing embodiments may be implemented individually or in any combination.

## Claims

1. A head-mounted device (10), comprising:
a head-mounted housing (12);
an optical assembly (20) in the head-mounted housing that is configured to provide an image to an eye box (36);
a gaze tracker (50); and
a motor (48) configured to position the optical assembly (20) based on a measured eye relief from the gaze tracker (50) and a measured interpupillary distance from the gaze tracker (50).

2. The head-mounted device defined in claim 1 wherein the motor (48) is configured to move the optical assembly (20) outward from a central portion of the head-mounted housing in response to determining that the measured eye relief is more than a predetermined threshold amount.

3. The head-mounted device defined in claim 1 wherein the motor (48) is configured to adjust the position of the optical assembly (20) outwards by a first amount in response to determining that the measured eye relief has an eye relief value that is more than a predetermined threshold amount and that the measured interpupillary distance has a first value and is configured to move the optical assembly outwards by a second amount that is more than the first amount in response to determining that the measured eye relief has the eye relief value and that the measured interpupillary distance has a second value that is less than the first value.

4. The head-mounted device defined in any preceding claim further comprising a vision correction lens sensor (53), wherein the motor (48) is further configured to position the optical assembly based on information from the vision correction lens sensor (53).

5. The head-mounted device defined in any preceding claim wherein the optical assembly (20) is configured to receive a removable vision correction lens (51) with a magnet that produces a magnetic field and wherein the motor (48) is further configured to position the optical assembly based on information from a magnetic sensor.

6. The head-mounted device defined in any preceding claim wherein the motor (48) is configured to provide a haptic alert by moving the optical assembly (20)

7. The head-mounted device defined in any preceding claim wherein the gaze tracker (50) is configured to measure skin tautness.

8. The head-mounted device defined in claim 7 wherein the motor (48) is further configured to adjust the position of the optical assembly (20) based on the measured skin tautness.

9. The head-mounted device defined in any preceding claim wherein the optical assembly (20) is a left optical assembly (20), the gaze tracker (50) is a left gaze tracker (50) in the left optical assembly (20), and the motor (48) is a left motor (48), the head-mounted device further comprising:
a right optical assembly (20) in the head-mounted housing, wherein the left and right optical assemblies (20) are separated by a separation distance and are configured to provide respective left and right images to left and right eye boxes (36);
a right gaze tracker (50) in the right optical assembly, wherein the left and right gaze trackers (50) are configured to measure an interpupillary distance and an eye relief; and
a right motor (48), wherein the left and right motors (48) are configured to respectively position the left and right optical assemblies (20), wherein the left and right motors (48) are configured to adjust the separation distance to be different than the measured interpupillary distance based on the measured eye relief.

10. The head-mounted device defined in claim 9 wherein the left and right motors (48) are configured to adjust the separation distance to be greater than the measured interpupillary distance based on the measured eye relief exceeding a predetermined eye relief threshold.

11. The head-mounted device defined in claim 9 or claim 10 wherein the left and right motors (48) are configured to adjust the separation distance to be greater than the measured interpupillary distance based on the measured interpupillary distance.

12. The head-mounted device defined in any of claims 9 to 11 wherein the left and right motors (48) are configured to adjust the separation distance to be greater than the measured interpupillary distance based on the measured interpupillary distance being below a predetermined interpupillary distance threshold.

13. The head-mounted device defined in any of claims 9 to 12 further comprising a vision correction lens presence sensor (53), wherein the left and right motors (48) are configured to adjust the separation distance based on information from the vision correction lens presence sensor (53).

14. The head-mounted device defined in claim 13 wherein the left and right optical assemblies are configured to receive left and right vision correction lenses (51), respectively, and wherein the vision correction lens presence sensor (53) comprises a magnetic sensor configured to measure a magnetic field from the left or right vision correction lens (51).

15. The head-mounted device defined in any of claims 9 to 14 wherein the left and right gaze trackers (50) are configured to measure skin tautness, and wherein the left and right motors (48) are configured to adjust the separation distance to be greater than the measured interpupillary distance based on the measured skin tautness.

## Patentansprüche

1. Kopfmontierte Vorrichtung (10), umfassend: ein kopfmontiertes Gehäuse (12); eine optische Baugruppe (20) in dem kopfmontierten Gehäuse, die konfiguriert ist, um ein Bild für eine Eyebox (36) bereitzustellen; einen Blick Tracker (50); und einen Motor (48), der konfiguriert ist, um die optische Baugruppe basierend auf einem gemessenen Augenrelief von dem Blicktracker (50) und einem gemessenen Pupillenabstand von dem Blicktracker (50) zu positionieren.

2. Kopfmontierte Vorrichtung nach Anspruch 1, wobei der Motor (48) konfiguriert ist, um die optische Baugruppe (20) von einem zentralen Abschnitt des kopfmontierten Gehäuses nach außen zu bewegen, als Reaktion auf das Bestimmen, dass das gemessene Augenrelief größer als ein vorbestimmter Schwellenwert ist.

3. Kopfmontierte Vorrichtung nach Anspruch 1, wobei der Motor (48) konfiguriert ist, um die Position der optischen Baugruppe (20) nach außen um einen ersten Betrag einzustellen, als Reaktion auf das Bestimmen, dass das gemessene Augenrelief einen Augenreliefwert aufweist, der größer als ein vorbestimmter Schwellenwert ist, und dass der gemessene Pupillenabstand einen ersten Wert aufweist, und konfiguriert ist, um die optische Baugruppe nach außen um einen zweiten Betrag zu bewegen, der größer als der erste Betrag ist, als Reaktion auf das Bestimmen, dass das gemessene Augenrelief den Augenreliefwert aufweist und dass der gemessene Pupillenabstand einen zweiten Wert aufweist, der kleiner als der erste Wert ist.

4. Kopfmontierte Vorrichtung nach einem der vorhergehenden Ansprüche, ferner umfassend einen Sichtkorrekturlinsensensor (53), wobei der Motor (48) ferner konfiguriert ist, um die optische Baugruppe basierend auf Informationen von dem Sichtkorrekturlinsensensor (53) zu positionieren.

5. Kopfmontierte Vorrichtung nach einem der vorhergehenden Ansprüche, wobei die optische Baugruppe (20) konfiguriert ist, um eine entfernbare Sichtkorrekturlinse (51) mit einem Magneten aufzunehmen, der ein Magnetfeld erzeugt, und wobei der Motor (48) ferner konfiguriert ist, um die optische Baugruppe basierend auf Informationen von einem Magnetsensor zu positionieren.

6. Kopfmontierte Vorrichtung nach einem der vorhergehenden Ansprüche, wobei der Motor (48) konfiguriert ist, um eine haptische Warnung durch Bewegen der optischen Baugruppe (20) bereitzustellen.

7. Kopfmontierte Vorrichtung nach einem der vorhergehenden Ansprüche, wobei der Blicktracker (50) konfiguriert ist, um Hautstraffheit zu messen.

8. Kopfmontierte Vorrichtung nach Anspruch 7, wobei der Motor (48) ferner konfiguriert ist, um die Position der optischen Baugruppe (20) basierend auf der gemessenen Hautstraffheit einzustellen.

9. Kopfmontierte Vorrichtung nach einem der vorhergehenden Ansprüche, wobei die optische Baugruppe (20) eine linke optische Baugruppe (20) ist, der Blicktracker (50) ein linker Blicktracker (50) in der linken optischen Baugruppe (20) ist und der Motor (48) ein linker Motor (48) ist, wobei die kopfmontierte Vorrichtung ferner umfasst: eine rechte optische Baugruppe (20) in dem kopfmontierten Gehäuse, wobei die linke und die rechte optische Baugruppe (20) durch einen Trennungsabstand getrennt sind und konfiguriert sind, um jeweilige linke und rechte Bilder für linke und rechte Eyeboxen (36) bereitzustellen; einen rechten Blicktracker (50) in der rechten optischen Baugruppe, wobei der linke und der rechte Blicktracker (50) konfiguriert sind, um einen Pupillenabstand und ein Augenrelief zu messen; und einen rechten Motor (48), wobei der linke und der rechte Motor (48) konfiguriert sind, um jeweils die linke und die rechte optische Baugruppe (20) zu positionieren, wobei der linke und der rechte Motor (48) konfiguriert sind, um den Trennungsabstand so einzustellen, dass er sich von dem gemessenen Pupillenabstand basierend auf dem gemessenen Augenrelief unterscheidet.

10. Kopfmontierte Vorrichtung nach Anspruch 9, wobei der linke und der rechte Motor (48) konfiguriert sind, um den Trennungsabstand so einzustellen, dass er größer als der gemessene Pupillenabstand ist, basierend darauf, dass das gemessene Augenrelief einen vorbestimmten Augenreliefschwellenwert überschreitet.

11. Kopfmontierte Vorrichtung nach Anspruch 9 oder Anspruch 10, wobei der linke und der rechte Motor (48) konfiguriert sind, um den Trennungsabstand so einzustellen, dass er größer als der gemessene Pupillenabstand ist, basierend auf dem gemessenen Pupillenabstand.

12. Kopfmontierte Vorrichtung nach einem der Ansprüche 9 bis 11, wobei der linke und der rechte Motor (48) konfiguriert sind, um den Trennungsabstand so einzustellen, dass er größer als der gemessene Pupillenabstand ist, basierend darauf, dass der gemessene Pupillenabstand unter einem vorbestimmten Pupillenabstandsschwellenwert liegt.

13. Kopfmontierte Vorrichtung nach einem der Ansprüche 9 bis 12, ferner umfassend einen Sichtkorrekturlinsen-Präsenzsensor (53), wobei der linke und der rechte Motor (48) konfiguriert sind, um den Trennungsabstand basierend auf Informationen von dem Sichtkorrekturlinsen-Präsenzsensor (53) einzustellen.

14. Kopfmontierte Vorrichtung nach Anspruch 13, wobei die linke und die rechte optische Baugruppe konfiguriert sind, um eine linke bzw. eine rechte Sichtkorrekturlinse (51) aufzunehmen, und wobei der Sichtkorrekturlinsen-Präsenzsensor (53) einen Magnetsensor umfasst, der konfiguriert ist, um ein Magnetfeld von der linken oder der rechten Sichtkorrekturlinse (51) zu messen.

15. Kopfmontierte Vorrichtung nach einem der Ansprüche 9 bis 14, wobei der linke und der rechte Blicktracker (50) konfiguriert sind, um Hautstraffheit zu messen, und wobei der linke und der rechte Motor (48) konfiguriert sind, um den Trennungsabstand so einzustellen, dass er größer als der gemessene Pupillenabstand ist, basierend auf der gemessenen Hautstraffheit.

## Revendications

1. Un dispositif à monter sur la tête (10), comprenant :
un boîtier à monter sur la tête (12) ;
un bloc optique (20) dans le boîtier à monter sur la tête, qui est configuré pour produire une image sur un œilleton (36) ;
un traqueur de regard (50) ; et
un moteur (48) configuré pour positionner le bloc optique (20) sur la base d'un dégagement oculaire donné par le traqueur de regard (50) et d'une distance interpupillaire mesurée donnée par le traqueur de regard (50).

2. Le dispositif à monter sur la tête (10) de la revendication 1 dans lequel le moteur est configuré pour déplacer le bloc optique (20) vers l'extérieur depuis une partie centrale du boîtier monté sur la tête, en réponse à une détermination que le dégagement oculaire mesuré est supérieur à une quantité seuil prédéterminée.

3. Le dispositif à monter sur la tête (10) de la revendication 1 dans lequel le moteur (48) est configuré pour ajuster d'une première quantité vers l'extérieur la position du bloc optique (20), en réponse à une détermination que le dégagement oculaire mesuré présente une valeur de dégagement oculaire qui est supérieure à une quantité seuil prédéterminée et que la distance interpupillaire mesurée présente une première valeur, et est configuré pour déplacer le bloc optique vers l'extérieur d'une seconde quantité qui est supérieure à la première quantité, en réponse à une détermination que le dégagement oculaire mesuré présente la valeur de dégagement oculaire et que la distance interpupillaire mesurée présente une seconde valeur qui est inférieure à la première valeur.

4. Le dispositif à monter sur la tête (10) de l'une des revendications précédentes comprenant en outre un capteur de lentille de correction de la vision (53), dans lequel le moteur (48) est en outre configuré pour positionner le bloc optique sur la base d'une information donnée par le capteur de lentille de correction de la vision (53).

5. Le dispositif à monter sur la tête (10) de l'une des revendications précédentes dans lequel le bloc optique (20) est configuré pour recevoir une lentille amovible de correction de la vision (51) avec un aimant qui produit un champ magnétique, et dans lequel le moteur (48) est en outre configuré pour positionner le bloc optique sur la base d'une information donnée par un capteur magnétique.

6. Le dispositif à monter sur la tête (10) de l'une des revendications précédentes dans lequel le moteur (48) est configuré pour délivrer une alerte haptique par déplacement du bloc optique (20).

7. Le dispositif à monter sur la tête (10) de l'une des revendications précédentes dans lequel le traqueur de regard (50) est configuré pour mesurer un tiraillement de la peau.

8. Le dispositif à monter sur la tête (10) de la revendication 7 dans lequel le moteur est en outre configuré pour ajuster la position du bloc optique (20) sur la base du tiraillement de la peau mesuré.

9. Le dispositif à monter sur la tête (10) de l'une des revendications précédentes dans lequel le bloc optique (20) est un bloc optique gauche (20), le traqueur de regard (50) est un traqueur de regard gauche (50) du bloc optique gauche (20), et le moteur (48) est un moteur gauche (48), dans lequel le dispositif à monter sur la tête (10) à monter sur la tête comprend en outre :
un bloc optique droit (20) dans le boîtier à monter sur la tête, les blocs optiques gauche et droit (20) étant séparés d'une distance de séparation et étant configurés pour produire des images gauche et droite respectives sur des œilletons gauche et droit (36) ;
un traqueur de regard droit (50) dans le bloc optique droit, les traqueurs de regard gauche et droit (50) étant configurés pour mesurer une distance interpupillaire et un dégagement optique ; et
un moteur droit (48), les moteurs gauche et droit (48) étant configurés pour positionner respectivement les blocs optiques gauche et droit (20), les moteurs gauche et droit (48) étant configurés pour ajuster la distance de séparation afin qu'elle soit différente de la distance interpupillaire mesurée, sur la base du dégagement oculaire mesuré.

10. Le dispositif à monter sur la tête (10) de la revendication 9 dans lequel les moteurs gauche et droit (48) sont configurés pour ajuster la distance de séparation afin qu'elle soit supérieure à la distance interpupillaire mesurée, sur la base du dégagement oculaire mesuré qui dépasse un seuil prédéterminé de dégagement oculaire.

11. Le dispositif à monter sur la tête (10) de la revendication 9 ou de la revendication 10 dans lequel les moteurs gauche et droit (48) sont configurés pour ajuster la distance de séparation afin qu'elle soit supérieure à la distance interpupillaire mesurée, sur la base de la distance interpupillaire mesurée.

12. Le dispositif à monter sur la tête (10) de l'une des revendications 9 à 11 dans lequel les moteurs gauche et droit (48) sont configurés pour ajuster la distance de séparation pour qu'elle soit supérieure à la distance interpupillaire mesurée, sur la base de la distance interpupillaire mesurée qui est au-dessous d'un seuil prédéterminé de distance interpupillaire.

13. Le dispositif à monter sur la tête (10) de l'une des revendications 9 à 12 comprenant en outre un capteur de présence de lentille de correction de la vision (53), les moteurs gauche et droit (48) étant configurés pour ajuster la distance de séparation, sur la base d'une information donnée par le capteur de présence de lentille de correction de la vision (53).

14. Le dispositif à monter sur la tête (10) de la revendication 13 dans lequel les blocs optiques gauche et droit sont configurés pour recevoir des lentilles gauche et droite de correction de la vision (51), respectivement, et dans lequel le capteur de présence de lentille de correction de la vision (53) comprend un capteur magnétique configuré pour mesurer un champ magnétique venant de la lentille gauche ou droite de correction de la vision (51).

15. Le dispositif à monter sur la tête (10) de l'une des revendications 9 à 14 dans lequel les traqueurs de regard gauche et droit (50) sont configurés pour mesurer un tiraillement de la peau, et dans lequel les moteurs gauche et droit (48) sont configurés pour ajuster la distance de séparation pour qu'elle soit supérieure à la distance interpupillaire mesurée, sur la base du tiraillement de la peau mesuré.
